# EUROPEAN PATENT APPLICATION

(11) **EP 0 726 050 A1**
(43) Date of publication of application: **14.08.1996**
(21) Application number: 96300544.2
(22) Date of filing: 26.01.1996
(51) Int. Cl.: A47J 27/08

(54) **Pressure cooker control arrangement**

(30) Priority: 27.01.1995 GB 9501638
(71) Applicant: PRESTIGE GROUP UK PLC, Burnley, Lancashire BB11 2AB (GB)
(72) Inventor: Whitlock, Peter, Kenilworth, Warwickshire (GB); White, David, Coundon, Coventry (GB)
(74) Representative: Marles, Alan David

(57) **Abstract**

There is provided a pressure cooker 10 having a base 11 and a cover 12. A cover moulding 13 incorporates an information panel 14 which is removable by way of clips 21. The panel 14 incorporates measuring means 16 for measuring the temperature of the cover, which temperature is an indication of the pressure. The panel 14 provides an indication as to the status of the cooking process based on the readings of the measuring means 16 which may be a thermistor.

## Description

The present invention relates to pressure cooker control arrangements.

According to the present invention there is provided a pressure cooker having a main body, a cooperating cover, means for measuring the temperature/pressure of the interior of the cooker when in use and an information panel providing indication of the status of the cooking process based on signals received from said measuring means.

Preferably said measuring means is wholly external of the cooker cover but in contact therewith, said cover being made of metal, the measuring means measuring temperature. In a preferred embodiment said measuring means comprises a thermistor.

It is a preferred feature that said information panel incorporates electronic means connected to the thermistor to determine a general temperature plateau inside the cooker and also said information panel indicates when said plateau is reached.

In some arrangements at a predetermined temperature, the electronic means calculates a reference temperature/time gradient over a time t and then periodically calculates sample temperature/time gradients subsequently. The sample gradients may be calculated over time periods of X seconds every Y seconds.

Preferably the time period X is 10 seconds and the period Y is 5 seconds such that the periods overlap, the sample gradients are calculated only after the temperature exceeds 102°C and said predetermined temperature is 60°C and the time t is 40 seconds.

With a preferred embodiment said plateau condition is reached when the magnitude of the sample gradient is less than a quarter of the magnitude of the reference gradient.

Ideally a timer is provided and is connected to the electronic means such that countdown begins once the plateau condition is reached. Preferably the indication means gives indication to reduce heat applied to the cooker once the plateau condition is reached and the indication means gives indication to increase heat applied to the cooker if the temperature drops below the plateau level. It is also preferred that said information panel and the temperature/pressure measuring means are removable from the lid and also that said information panel and the temperature/pressure measuring means are combined in a single unit with a display panel and audible indication means.

Various embodiments of the present invention will now be described in more detail. The description makes reference to the accompanying diagrammatic drawings in which:
Figure 1 is a partial plan view of a pressure cooker according to the present invention,
Figure 2 is a side view of the cooker of figure 1,
Figure 3 is a graph of the cover temperature of the cooker against time in a typical use situation, and
Figures 4a, b, c and d show examples of possible measuring means used in the figure 1 arrangement.

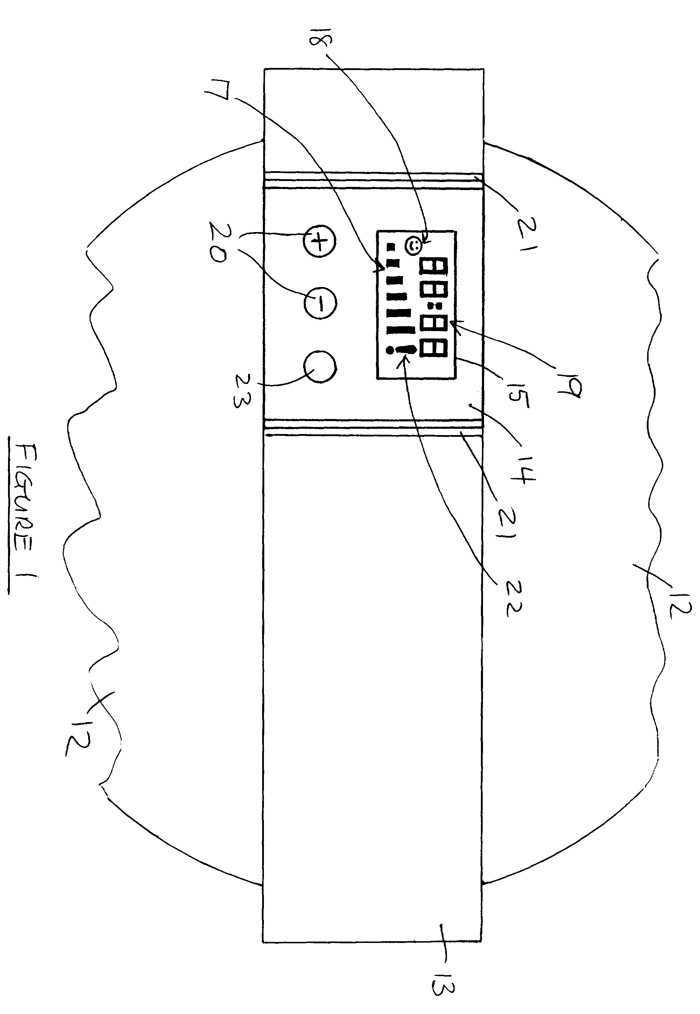

In figures 1 and 2 there is shown a pressure cooker 10 having a base 11 and a cover 12 both made in this example from stainless steel. Other metals can of course be used. Spanning the cover 12 and releasably connected thereto is a cover moulding 13. The releasable connection means are not shown. Incorporated in the moulding 13 is an information panel 14 which is also releasably connected to the moulding 13 by way of clips 21 for example. The panel 14 has a display area 15 and incorporates measuring means 16 for measuring the temperature of the cover 12. Examples of suitable measuring means 16 are discussed later in the specification, but in all forms the temperature of the cover or pressure inside the cooker have an effect on an electrical signal. The electrical signal is utilised by electronic means (not shown) and causes the information panel to give information accordingly.

In this particular example the measuring means 16 comprises a thermistor which is, in use, in contact with the cover 12 thereby giving a measure of the temperature inside the cooker above the food being cooked. It will be appreciated that in a pressure cooker, the temperature of the interior above the food is a direct indication of the pressure. Also, in a pressure cooker, the idea is to cook the food at an elevated pressure which pressure ideally remains generally constant. The desired operating pressure is usually selected by the user of the cooker. Once the desired pressure is attained the heat applied to the cooker is reduced somewhat in an attempt to maintain the pressure generally constant at the desired value. It is, however, notoriously difficult with known cookers to assess when the desired pressure is reached and to adjust the heat applied so as to keep the desired pressure.

The electronic means of the present arrangement assesses and the display area 15 shows the progress of the cooking process. Firstly the temperature is monitored as it rises and a series of bars 17 light up on the display 15 to indicate the increasing temperature and therefrom pressure. When the thermistor measures a temperature of 60°C a reference temperature gradient θ is calculated over a period of time of 40 seconds, namely the new temperature minus 60°C divided by 40 seconds. Reference is made to figure 3 in this regard.

After the thermistor senses a temperature of 102°C, that is above boiling point of water at atmospheric pressure, the electronic means calculates sample temperature gradients φ every five seconds with each gradient being calculated over ten seconds or t/4. In this way a constantly overlapping series of gradients φ are calculated. Each sample gradient φ is compared with the reference gradient θ and, in this arrangement, when the magnitude of the sample gradient φ (either positive or negative) is less than θ/4 then the display 15 indicates that a plateau temperature, and thus pressure, has been attained. The pressure regulation valve will of course vent slightly each time the desired pressure is passed and this is why the plateau is effectively an ideal situation which is not achieved in practise. In a real situation the temperature/pressure will fluctuate between certain values.

Once the plateau is reached the display 15 shows, in this example by lighting the smiling face symbol 18. The information panel 14 also makes an audible signal to tell the user to reduce the heat being applied. All through the cooking process the sample gradients are calculated and if the condition of <θ/4 is no longer satisfied, i.e. the temperature drops then the face symbol 18 of the information panel will go out and audible indication to increase the heat being applied to the cooker will be made so as to bring the temperature back up to the plateau level.

The information panel 14 also includes a timer 19 which is set by the user using buttons 20 to a particular time at the desired operating pressure. The electronic means controls the timer such that the timer only starts once the plateau condition is attained. Audible and/or visible means may be coupled to the timer to indicate when the cooking period is complete and the pressure cooker can be vented. There is also an on/off button 23.

Other information which may be provided includes an audible/visual warning that the temperature rise of the cooker is too slow such that the heat to the cooker must be increased. This can be achieved by the electronic means with a simple comparison of the temperature gradient with a predetermined valve.

It will be appreciated that the particular gradient parameters discussed above for determining the temperature/pressure plateau are examples of suitable parameters. Also, the particular symbols used on the information panel 14 are also examples and could therefore be varied as desired.

Clearly the detachable nature of the information panel 14 from the moulding 13 is desirable from the point of view of cleaning and maintenance. The pressure cooker will of course operate in a basic form without the information panel being present.

There may also be a display item 22 and/or audible warning for the cooker operating at an unsafe pressure. This may be the result of the pressure regulation valve not working properly and a warning will be given before the safety valve of the cooker is activated.

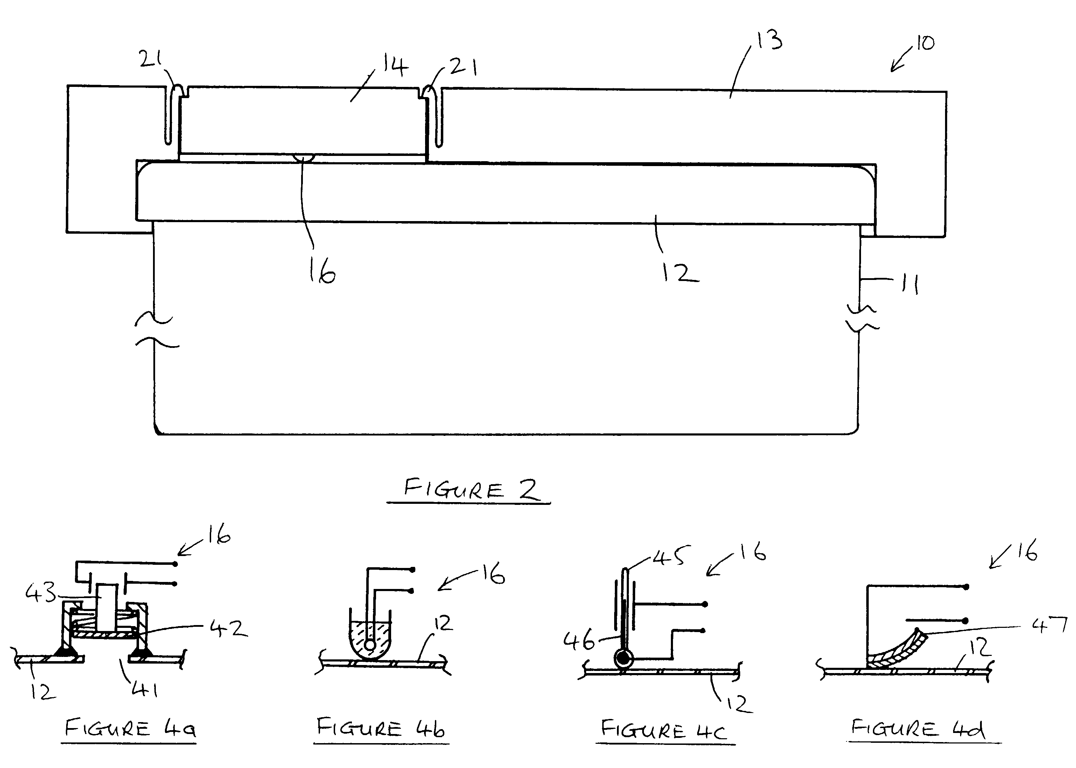

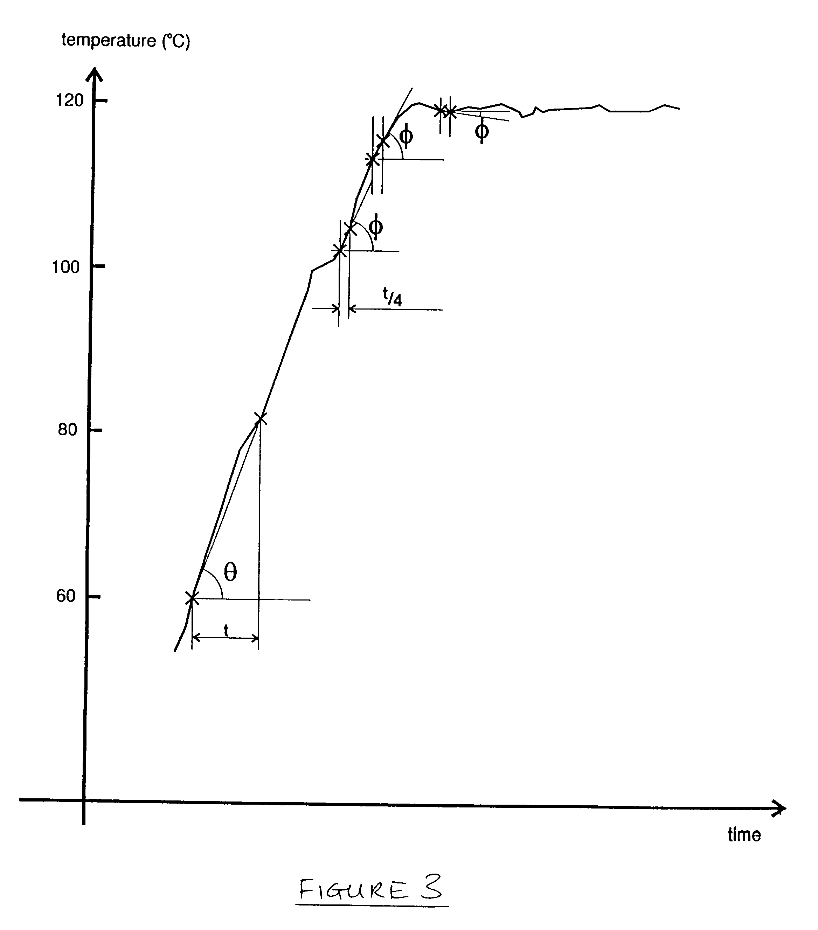

Figures 4a, b, c and d show examples of devices which could be used to measure the pressure inside the cooker or the temperature of the cover, which is with a metal cooker substantially the same as that inside the cooker.

In figure 4a there is shown an intrusive arrangement 16 which is sealingly coupled around a hole 41 in the cover 12. The pressure inside the cooker acts on a spring loaded piston 42. The piston 42 has a portion 43 which causes a change in capacitance in a circuit which in turn is detected by electrical methods such as a tuned circuit.

Figure4b shows a non-invasive measuring means 16 which relies on a change in resistance of an electronic device such as a thermistor contacting the cover. The resistance change is sensed by an electronic device.

In figure 4c a simple thermometer 45 having a mercury column 46 contacts the cover 12. The change in the height of the mercury column changes the capacitance of a circuit.

In figure 4d, a bimetallic strip 47 contacts the cover 12. The change of temperature of the cover causes the strip 47 to bend resulting in the making and breaking of an electronic circuit at a certain temperature.

Other ways of measuring the temperature/pressure will be of course apparent and other information may be displayed or cause audible warnings.

## Claims

1. A pressure cooker having a main body, a cooperating cover, means for measuring the temperature/pressure of the interior of the cooker when in use and an information panel providing indication of the status of the cooking process based on signals received from said measuring means.

2. A pressure cooker as claimed in claim 1 wherein said measuring means is wholly external of the cooker cover but in contact therewith, said cover being made of metal, the measuring means measuring temperature.

3. A pressure cooker as claimed in claim 1 or claim 2 wherein said measuring means comprises a thermistor.

4. A pressure cooker as claimed in any one of claims 1 to 3 wherein said information panel incorporates electronic means connected to the thermistor to determine a general temperature plateau inside the cooker.

5. A pressure cooker as claimed in claim 4 wherein said information panel indicates when said plateau is reached.

6. A pressure cooker as claimed in claim 4 or claim 5 wherein at a predetermined temperature, the electronic means calculates a reference temperature/time gradient over a time t and then periodically calculates sample temperature/time gradients subsequently.

7. A pressure cooker as claimed in claim 6 wherein the sample gradients are calculated over time periods of X seconds every Y seconds.

8. A pressure cooker as claimed in claim 7 wherein the time period X is 10 seconds and the period Y is 5 seconds such that the periods overlap, the sample gradients are calculated only after the temperature exceeds 102°C and said predetermined temperature is 60°C and the time t is 40 seconds.

9. A pressure cooker as claimed in claim 8 wherein said plateau gradient is less than a quarter of the magnitude of the reference gradient.

10. A pressure cooker as claimed in any one of claims 6 to 9 wherein a timer is provided and is connected to the electronic means such that countdown begins once the plateau condition is reached.

11. A pressure cooker as claimed in any one of claims 6 to 10 wherein the indication means gives indication to reduce heat applied to the cooker once the plateau condition is reached and the indication means gives indication to increase heat applied to the cooker if the temperature drops below the plateau level.

12. A pressure cooker as claimed in any one of claims 6 to 11 wherein said information panel and the temperature/pressure measuring means are removable from the lid and also that said information panel and the temperature/pressure measuring means are combined in a single unit with a display panel and audible indication means.
